## Europäisches Patentamt
## European Patent Office
## Office européen des brevets

(19)

(11) Publication number: **0 010 737**
**B1**

(12)

# EUROPEAN PATENT SPECIFICATION

(45) Date of publication of patent specification: **01.12.82**

(51) Int. Cl.³: **A 01 G 31/02,**
**A 01 G 31/00**

(21) Application number: **79104142.9**

(22) Date of filing: **25.10.79**

(54) Units and system for hydroponics.

(30) Priority: **31.10.78 IL 55830**

(43) Date of publication of application:
**14.05.80 Bulletin 80/10**

(45) Publication of the grant of the patent:
**01.12.82 Bulletin 82/48**

(84) Designated Contracting States:
**AT BE CH DE FR GB IT LU SE**

(56) References cited:
**WO - A - 79/00480**
**DE - A - 2 619 305**
**US - A - 3 660 933**
**US - A - 3 906 667**
**US - A - 3 925 926**
**US - A - 4 118 891**

(73) Proprietor: **EIN-GEDI, KVUTZAT POALIM LEHITYASHVUT HAKLAIT SHITUFIT B.M.**
**Kibbutz Ein-Gedi**
**Moetza Mekomit Tamar Doar Na. Yam Hamelach (IL)**

(72) Inventor: **Soffer, Hillel Kibbutz Ein-Gedi**
**Moetza Mekomit Tamar**
**Doar Na Yam Hamelach (IL)**
Inventor: **Levinger, Dov Kibbutz Ein-Gedi**
**Moetza Mekomit Tamar**
**Doar Na Yam Hamelach (IL)**

(74) Representative: **Wuesthoff, Franz, Dr.-Ing. et al,**
**Patentanwälte Wuesthoff -v. Pechmann-Behrens-Goetz Schweigerstrasse 2**
**D-8000 München 90 (DE)**

Courier Press, Leamington Spa, England.

Units and system for hydroponics

The present invention concerns hydroponics, i.e. the growing of plants without soil.

As far back as the seventeenth century it was already suggested by Robert Boyle and others that plants could be grown without soil. Ever since then attempts have repeatedly been made to develop commercial systems for the growing of plants in water or on an inert carrier substrate but so far no satisfactory commercial method could be developed.

The first attempts at hydroponics were based on the immersion of the roots of growing plants in a stationary, aqueous, nutrient solution, means having been provided for holding the plants in position. However, this method turned out to be impractical, inter alia because the nutrient solutions did not contain from the outset a sufficient amount of oxygen. Moreover, after a short while the little oxygen that had been present in the starting solution was spent and the solution also became depleted in essential nutrient ingredients, such as for example, iron. Furthermore, there occurred an excessive accumulation of carbon dioxide exuded by the roots, due to insufficient removal thereof. Furthermore, fastening the plants for holding them in position with the roots in the nutrient solution was a cumbersome, labour-consuming operation. Finally, this method could not be used for budding or rooting stalks or sticks and it was necessary to transplant the young plants from a seed bed or nursery.

In attempts to overcome these difficulties, methods of hydroponics were developed using an inert substrate such as sand, gravel, vermiculite and rockwool. In these methods the substrate serves as a hold for the roots and also as a vehicle for the nutrient solution. In operation the substrate is soaked with a nutrient solution which flows therethrough continuously or intermittently. In the substrate the continuous body of nutrient solution of the previous method is replaced by narrow channels, occasionally of capillary dimensions, in which continuously or intermittently flowing thin films or layers of nutrient solution are in contact, on the one hand, with trapped air and, on the other hand, with the roots. It was believed that in this way the problems of oxygen supply and carbon dioxide removal would be resolved.

Various specific methods have been developed on the basis of this general principle but contrary to expectations the supply of fresh oxygen and withdrawal of carbon dioxide were insufficient. Although various means have been devised for increasing the oxygen content of the feed nutrient solution, e.g. by introduction of the solution into the inert bed by free-fall, the overall results remained unsatisfactory.

Furthermore, these methods as well are not suitable for budding or rooting and consequently here again young plants have to be transplanted from conventional seed beds or nurseries.

A further shortcoming of the inert substrate methods is due to the very fact that in the substrate all the root portions are surrounded only by thin layers of nutrient solution. These thin layers become rapidly exhausted of nutrients and oxygen and they have, therefore, to be replaced regularly. If in consequence of a mechanical failure the regular replacement is interrupted for a while, the crop is adversely affected and may even be lost. These methods are thus sensitive to breakdown in the supply of fresh nutrient solution which puts limitations on their commercial applicability.

Yet another drawback of these methods is that after each harvest it is necessary either to replace the inert substrate or wash it very thoroughly from root remnants and debris of the last crop in order to avoid the occurrence of rot during the growing of the next crop.

There is also known so-called nutrient film technique. In accordance with this method of hydroponics a nutrient solution is continuously flown as a thin film through tubular or channel-like units in which the stalks of the growing plants are held with their roots spreading on the bottom. This method, while solving satisfactorily the problem of regular supply of oxygen and nutrients and of regular withdrawal of carbon dioxide, is also highly dependent on the regular flow of the nutrient solution because of the small amounts of solution that are in contact with the roots. Consequently, here again, if for some reason the regular flow of nutrient solution is interrupted the crop is spoiled within a short while and this method is thus too sensitive to mechanical failures to be of commercial applicability. Moreover this method as well is unsuitable for sowing, budding and rooting and therefor is before, young plants have to be transplanted from conventional seed beds or nurseries.

It is moreover inherent in this method that there occurs a concentration gradient of all ingredients of the nutrient solution along the unit in the direction of flow with a consequential plant performance gradient.

This last-mentioned shortcoming is avoided to a certain extent by a hydroponics system for growing plants in an aqueous nutrient solution (US—A 3,666,933) including troughs for conducting a predetermined level of nutrient solution, established by overflow gates for the continuous discharge of the solution. The solution is supplied to each trough by a branch pipe extending along the length of the trough and including a plurality of outlets spaced at uniform intervals. The nutrients are thereby dispersed relatively evenly along the length of the trough. Each outlet is spaced from the surface of the nutrient solution. It is directed downwardly toward it and has an associated aspirator or eductor whereby air is entrained by the solution issuing from the outlet thereby providing substantially uniform aeration of the nutrient solution.

Each plant is supported by a receptacle spaced above the nutrient solution level and has an open bottom through which the plant stem extends into the nutrient solution. The plant is held by resilient foam plastic inserts disposed between the plant stem and the receptacle wall well above the bottom of the receptacle.

It is the object of the present invention to provide an improved hydroponics unit in which the regular supply of nutrients and in particular of oxygen and the regular withdrawal of carbon dioxide is ensured; in which plant performance is uniform; which ensures that only the root portion of the plant is immersed in the nutrient solution irrespective of its size, which at the same time is suitable for sowing, budding and rooting; and which has a large absorption capacity for technical failures such that if the supply of fresh nutrient solution is interrupted for a long period, say two days or even more, the crop is not at all or not significantly affected.

In accordance with the present invention there is provided a hydroponics unit comprising a covered trough adapted for holding a body of nutrient solution and an air space above the solution, an overflow means for the continuous discharge of the solution from the trough, said overflow means being adjustable such that by adjustment of the overflow means the liquid level within the trough is controlled, means for the continuous injection of an aqueous plant nutrient solution into the trough and plant holder penetrating into the trough through a cover and holding a stalk portion of the plant characterised in that the means for the continuous injection of an aqueous plant nutrient solution being adapted to inject the solution in atomized form into said air space in the upward direction, and said plant holders being adapted each to hold the lower stalk portion of a growing plant and comprising each means for supporting the lower stalk end of the plant at or above the surface level of the nutrient solution in the trough while at the same time allowing the roots depending from the stalk to reach into the solution.

During operation the air space within the trough is completely filled with a mist or fog of the atomized nutrient solution. In consequence of the upwardly directed atomization the injected nutrient solution absorbs considerable quantities of oxygen from the surrounding air and in this way the required amount of oxygen in the nutrient solution is ensured. As the solutions flows continuously through the trough a sufficient amount of oxygen is ensured at all times.

The flowing solution in the trough is — as is conventional — in direct contact with the roots without the formation of any barrier layer and consequently the constant supply of oxygen to the roots and the withdrawal of exuded carbon dioxide from their vicinity is provided. The flowing solution also ensures a steady supply of the nutrients.

The amount of nutrient solution in the unit at any time is relatively large so that at all times a large excess of oxygen and nutrient ingredients is present. Because of this the plants will continue to grow and not suffer any significant damage even if due to some technical failure the regular flow of nutrient solution is stopped for some time. In experiments conducted in accordance with the present invention with various plants, e.g. tomatoes, at 19°C the regular flow of nutrient solution was interrupted for as much as five days without any permanent adverse effect on the crop.

Due to the specific design of the plant holder with said supporting means, it is in accordance with the present invention for the first time possible to raise plants hydroponically from the start, i.e. from seeds, bulbs, buds or stalks. In case of budding a seed, bulb or bud, as the case may be, is placed on a support within a plant holder and the level of the nutrient solution in the trough and/or the position of the holder in the cover is so adjusted that the solution touches the support from below. Due to surface tension phenomena the upper face of the supporting means will be covered by a thin film of nutrient solution and in this way the seed, bud or bulb will be in constant contact with the solution and the budding sets on. With the emergence of a plant and the formation of roots the contact between the solution and the support will be severed by lowering the level of the solution in the trough and/or raising the holder and in this way any rotting of the lower stalk portion of the developing seeding or shoot is prevented.

Rooting of stalks proceeds in a similar way. The stalk is inserted into the plant holder with its lower end abutting said supporting means and as the roots develop the direct contact between the supporting means and solution is severed in the same manner as above.

If desired, said supporting means may be arranged to be vertically reciprocable within the plant holder between an upper and lower position. In this way, as long as the relative positions of the plant holder and the level of the solution in the trough is such that the supporting means are at intermediary positions, they float on the surface of the solution and in this way constant contact between the solution and the budding or rooting plants is ensured for as long as this is required. When the contact has to be severed, the holder, is raised and/or the level of the solution in the trough is lowered and thereby the support is arrested in its lowermost position from where the contact can be severed as explained before. Such an embodiment is of particular advantage in case of sprouting from seeds.

The supporting means of the plant holder may, for example, be in form of a panel extending within the holder between two opposite walls thereof; or by way of a further example, in form of a bracket projecting from one of the walls of the holder; and it may, if desired, be perforated or in form of a grid or net.

The plant holders offer adequate and sufficient support for the young plants to enable them to emerge from the trough. Depending on the nature of the plant, as it continues to grow, there may be required additional outside support means in order to raise it in upright position, which may, for example, be the case with grapes, tomatoes and the like. In other cases, for example, certain ornamental plants and flowers, outside support may not be required.

Preferably the trough of a hydroponics unit according to the invention is made accessible from the outside in order to enable servicing during operation and removal of roots and bulbs from the trough at the end of the growing period (which roots and bulbs do in many instances constitute the actual product). For this purpose the cover may be totally or partially removable or swingable by being hinged to one of the side walls.

The plant holders may be made integral with the cover, be slidably inserted therein or rest on the bottom of the trough. In the second case the position of the plant holder inside the trough is adjustable without it being necessary to raise or lower the level of the solution within the trough.

The overflow means for the discharge of solution from the trough may be adjustable mechanically or manually. Manual adjustment is best effected from within the trough and to this end at least part of the cover has to be removable or swingable.

In order to prevent the formation of concentration gradients in the nutrient solution within the trough it is preferred to provide several injectors axially spaced from each other. Thus in accordance with one embodiment of the invention the hydroponics unit comprises at least one oblong feeder tube extending within the trough in essentially axial direction and provided with a plurality of atomizing ejectors. (They are "ejectors" when considered with reference to said tube and "injectors" when considered with reference to the trough.) Preferably the ejectors are so oriented that the atomized solution is ejected into the trough upwards. In this way the duration of contact of each droplet with the surrounding air and the consequential absorption of oxygen therefrom is maximized. Preferably the bores in the tube are conically shaped, opening towards the outside, and are slanted in the direction of flow. Pipes with such bores are commercially available, e.g. from Plassim, Kibbutz Merhavia, Israel, and can be used to advantage for the purpose of the present invention.

In operation nutrient solution flows under a selected pressure through these feeder tubes and is ejected therefrom in atomized form into the air space in the trough as specified.

The invention further provides a hydroponics installation comprising at least one unit of the kind specified connected, on the one hand, to nutrient solution feeder means and, on the other hand, to nutrient solution drainage means; a reservoir of nutrient solution; and means for circulating the nutrient solution in closed cycle between said unit(s) and reservoir.

In such an installation each unit is linked to said drainage means through the overflow tube. Preferably the connection between the overflow tube and the drainage means is so-designed that there occurs a free-fall of the discharged solution into the drainage means. During such free-fall excess carbon dioxide is removed and some fresh oxygen is absorbed from the surrounding air.

The invention also provides for use in a unit of the kind specified a plant holder comprising means for holding a stalk in an upright position and a support for the lower end of the stalk so designed as to allow the roots to depend freely from the stalk and reach down.

The trough and cover of a hydroponics unit according to the invention may be of any suitable material resistant to the nutrient solution. Where it is desired to maintain a substantially constant temperature within the trough it is preferable to make the trough and the cover of insulating material. For example, a two-sheet plastic board with reinforcing ribs between the sheets has been found suitable.

The invention is illustrated, by way of example only, in the accompanying drawings in which:

Fig. 1 is a plan view of a hydroponics unit according to the invention;

Fig. 2 is a section along line II—II of Fig. 1 drawn to a larger scale;

Fig. 3 is a section along line III—III of Fig. 1 drawn to a larger scale;

Fig. 4 is a perspective view, partly broken open, of a plant holder according to the invention;

Fig. 5 is a wall fragment of a unit according to the invention;

Fig. 6 is a diagrammatic illustration of a hydroponics installation employing a plurality of units according to Figs. 1 to 5; and

Fig. 7 is a partial elevation of an installation according to Fig. 6 showing the arrangement of the units.

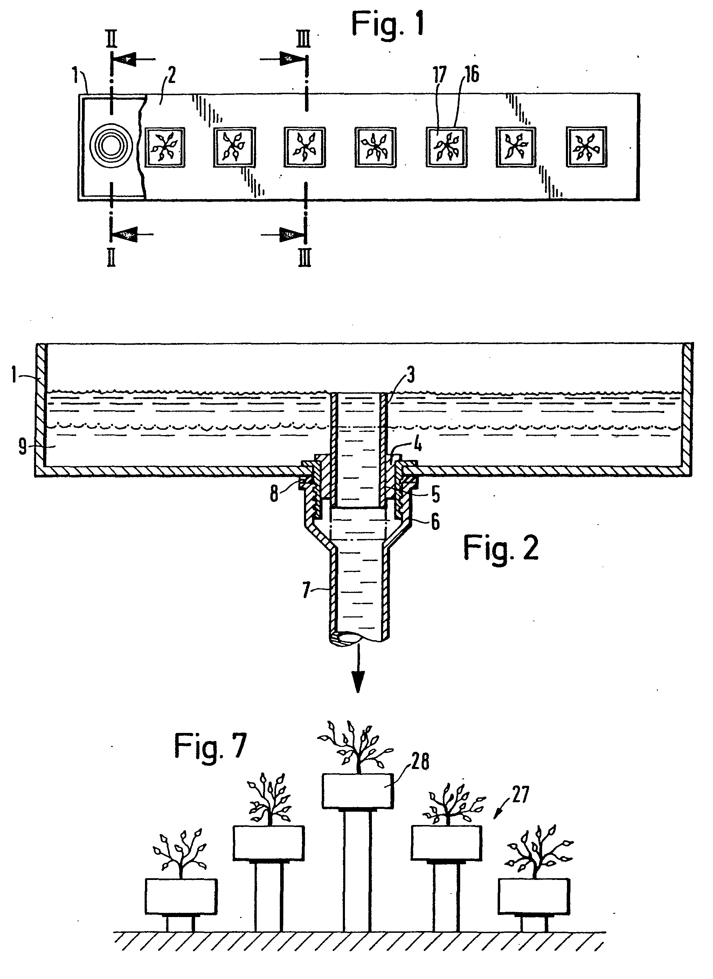

The unit shown in Figs. 1 to 5 comprises a trough 1 with a removable cover 2. Near one of its ends trough 1 is fitted with an overflow tube 3, slidably inserted within a rubber sleeve 4 which in turn is inserted within a sleeve 5 on which is screwed the upper, funnel shaped end 6 of a drainage pipe 7 with the interposition of an annular gasket 8. Tube 3 can be lowered or raised manually and by doing so the level of the body of liquid 9 inside trough 1 is lowered or raised, as the case may be. In order to gain access to the overflow tube 3 cover 2 has to be slightly lifted or shifted. Preferably the diameter of the overflow tube 3 is such that the overflowing solution flows in a laminar flow along the inner wall of the tube and in this way the overflowing solution may absorb oxygen from and deliver excessive carbon dioxide to the air present in the central portion of tube 3.

Drainage pipe 7 leads to a collector pipe (not shown) and preferably the arrangement is such that the solution drops from tube 3 through pipe 7 into the collector pipe by free-fall whereby the above absorption of oxygen from and delivery of carbon dioxide to the atmosphere is further enhanced.

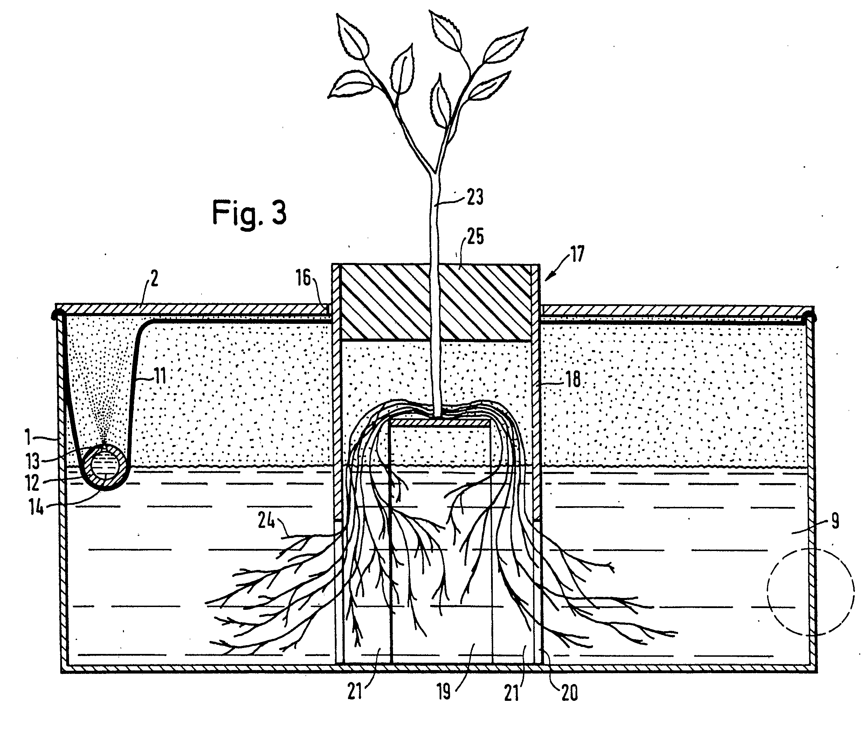

From the upper, longitudinal edges of trough 1 there are suspended at regular intervals, a plurality of bent wire braces 11 one of which is shown in Fig. 3. As shown the ends of each brace 11 are hook-shaped in order to enable its suspension. In order to avoid a clearance between the cover 2 and the trough, notches or cut-outs are provided in the upper edges of the trough and/or cover 2 to receive the hook-shaped ends of each brace 11.

Braces 11 serve for supporting a solution feeder tube 12 connected in a manner not shown in Figs. 1—5 to solution supply means. Feeder tube 12 is partly immersed in the solution with its upper portion being exposed to the air space above solution 9. In this way portion feeder tube 12 comprises a plurality of bores 13 through which the pressurized solution 14 flowing through the tube is ejected in atomized form. Preferably each bore 13 is conically shaped, widening towards the outside of tube 12 and is slanted in the direction of flow of solution 14. The atomized solution is ejected through bore 13 in the direction of cover 2 and in this way the entire air space of the trough above the level of the body of solution 9 is filled with a mist or fog of solution which drops gradually and constantly into the body of solution while at the same time being continuously reconstituted by ejection from tube 12.

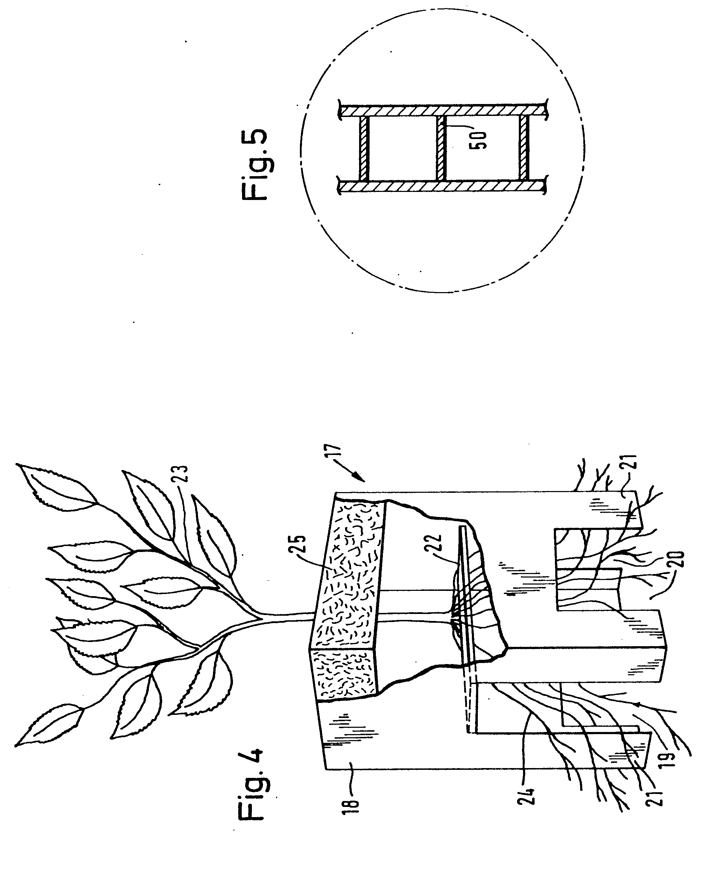

Cover 2 of unit 1 comprises a plurality of rectangular cut-outs 16 each of which receives snugly a plant holder 17. As shown in Figs. 3 and 4 each holder 17 comprises a prismatic body 18 with one larger cut-out 19 and three smaller cut-outs 20. The cut-outs 19, 20 define between them four legs 21. From the upper edge of cut-out 19 there extends a horizontal plate 22 serving as support for the lower end of the stalk of a plant 23. Between the two longitudinal edges of plate 22 and the opposite walls of body 18 there are clearances sufficiently wide to enable the depending roots 24 to reach freely into the body of solution 9 (see Fig. 3). As can be seen from Fig. 3, plate 22 is located above the surface of solution 9 and in this way any sliding is avoided. If during operation contact between plate 22 and the surface of solution 9 is desired, the holder 17 may be lowered and/or the surface of the solution inside the trough may be raised. Where a higher level of the solution inside the trough 1 is required, braces 11 may have to be replaced so as to ensure that the upper portion of tube 12 is at no time submerged.

The upper portion of the stalk of plant 23 is held by a foam 25 snugly inserted into body 18.

Fig. 5 shows to a larger scale the encircled portion of Fig. 3. As shown the walls of trough 1 are made of a two-ply sheet in which the plies are interconnected by reinforcing ribs 50. In this way there is provided an insulating air layer within the wall.

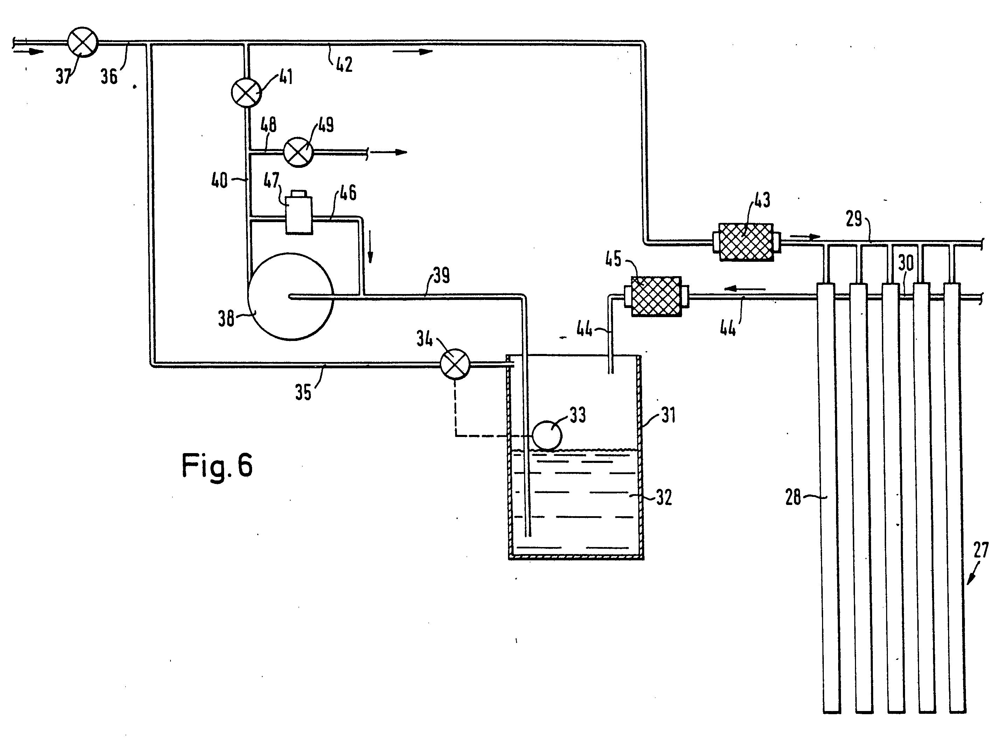

Fig. 6 illustrates diagrammatically a hydroponics installation employing five units according to the invention of the kind illustrated in Figs. 1—5. As shown in a battery 27 units 28 are connected in parallel, on the one hand, to a distributor 29 of feed solution and, on the other hand, to a collector 30 of spent solution.

The installation further comprises a tank 31 holding a body of solution 32 and fitted with a float 33 capable of actuating a valve 34 inserted in a duct 35 which leads to a supply line 36 of fresh water controlled by means of a valve 37.

There is moreover provided a pump 38 whose intake end is linked by means of a duct 39 to the body of solution 32 inside tank 31 and its delivery end is linked through duct 40, valve 41, duct 42 and filter 43 to distributor 29. Collector 30 is linked to the air space inside tank 31 through a duct 44 fitted with a filter 45.

For the event that the delivery of pump 38 exceeds the requirements of battery 27, e.g. if some of the units 28 are disconnected, a return duct 46 is provided fitted with a pressure reducer 47.

There is further provided a discharge pipe 48 fitted with a control valve 49 for the rejection of spent solution.

The operation of this installation is as follows:

Solution is continuously withdrawn from tank 31 by means of a pump 38 and is delivered through duct 40, valve 41, duct 42 and filter 43 to the distributor 29 from where it is evenly distributed among the five units 28 of battery 27. Within each unit 28 the solution is delivered by injection in the manner described with reference to Fig. 3 and excess solution is continuously discharged from each unit 28 by overflow, again as described with reference to Fig. 3. The discharged solution is drained into collector 30 from where it flows through drain pipe 44 and filter 45 back into tank 31.

If during operation one or more of units 28 has to be serviced and is therefore cut off from the circulation of solution, it may occur that the delivery of pump 38 exceeds the requirement. In such cases the excess solution is returned through duct 46 and pressure reducer 47 to the

During operation the solution is repeatedly used and gradually depleted of its nutrient ingredients. It is therefore necessary from time to time to replace the solution. For this purpose valve 41 is shut and valve 49 is opened and solution from tank 31 is now rejected through discharge pipe 48.

For the preparation of new nutrient solution and nutrient ingredients are introduced into tank 31, valve 37 is opened and valve 48 is shut. Fresh line water now flows on the one hand, directly into tank 31 through line 35 and valve 34 and on the other hand through line 42, filter 43 and distributor 29 into units 28 which are thus flushed. The flushing water discharged from units 28 flows into tank 31 in the manner specified hereinbefore.

The fresh water arriving in tank 31 dissolves the nutrient ingredients and the inflow of fresh water continues until valve 34 is shut by float 33. Thereupon valve 37 is shut, valve 41 is opened and the installation is ready for a new cycle of operation.

As shown in Fig. 7, the units 28 in battery 27 are arranged in pyramidal form which reduces the mutual interference of the plants in the different units with their exposure to solar radiation, which exposure is thus maximized.

Hydroponics installations employing units according to the invention are very versatile and can be employed for various different purposes in agriculture, horticulture, research and the like; and they can be used for large-scale production, for small scale domestic purposes and also in the laboratory.

**Claims**

1. A hydroponics unit comprising a covered trough (1) adapted for holding a body of nutrient solution (9) and an air space above the solution, an overflow means (3) for the continuous discharge of the solution from the trough, said overflow means (3) being adjustable such that by adjustment of the overflow means the liquid level within the trough is controlled, means (12, 13) for the continuous injection of an aqueous plant nutrient solution into the trough and plant holder (17) penetrating into the trough through a cover (2) and holding a stalk portion (23) of the plant, characterised by:

(a) the means (12, 13) for the continuous injection of an aqueous plant nutrient solution being adapted to inject the solution in atomized form into said air space in the upward direction and

(b) said plant holders (17) being adapted each to hold the lower stalk portion of a growing plant and comprising each means (22) for supporting the lower stalk end of the plant at or above the surface level of the nutrient solution (9) in the trough while at the same time allowing the roots depending from the stalk to reach into the solution.

2. A unit according to Claim 1, wherein said supporting means (22) are vertically reciprocable within said plant holder (17) and adapted to float on the nutrient solution.

3. A unit according to Claim 1 or 2, wherein the cover (2) is removable.

4. A unit according to any one of the preceding claims, wherein the plant holders (17) are made integral with the cover.

5. A unit according to any one of Claims 1 to 3, wherein the plant holders (17) are slidably inserted in the cover (2).

6. A unit according to any one of Claims 1 to 3, wherein the plant holders (17) rest on the bottom of the trough (1).

7. A unit according to any one of the preceding claims wherein the overflow (3) is connected to drainage means (7) in such a way that solution (9) is discharged from the former to the latter by free-fall.

8. A unit according to any one of the preceding claims, wherein a plurality of solution injector means (13) are provided inside the trough (1) spaced from each other in axial direction.

9. A unit according to claim 8, comprising a feeder tube (13) extending in axial direction with a plurality of bores (13) adapted to eject solution flowing under pressure through the tube.

10. A unit according to Claim 9, wherein each bore (13) widens towards the outside and is slanted in the direction of flow of the solution through the tube (12).

11. A unit according to any one of the preceding claims, wherein the walls of the trough (1) are heat insulated.

12. A unit according to Claim 11, made of plastic sheet material comprising two plies spaced from each other and interconnected by a plurality of discrete spacer elements (50).

13. A unit according to any one of Claims 1 to 12, the plant holder (17) further comprising means (25) for holding a stalk in an upright position.

14. A unit according to any of Claims 9 to 13, wherein said support (22) of the plant holder (17) for supporting the lower stalk end of the plant is vertically reciprocable and adapted to float on the nutrient solution.

15. A hydroponics installation comprising at least one unit according to any one of Claims 1 to 14, connected on the one hand to nutrient solution feeder means (29) and on the other hand to nutrient solution discharge means (30); a reservoir (31) of nutrient solution; and means (38) for circulating the nutrient solution in closed circuit between said unit(s) and the reservoir.

**Revendications**

1. Appareil de culture hydroponique, comportant un bac (1) couvert destiné à recevoir un volume (9) d'une solution nutritive

6

et renfermant, au-dessus de cette dernière, un espace d'air; un trop-plein (3) permettant la sortie continue de la solution nutritive du bac et étant réglable de façon à contrôler la hauteur du liquide à l'intérieur du bac; un dispositif (12, 13) d'injection continue d'une solution nutritive acqueuse pour plantes dans le bac; et un porte-plante (17) qui pénètre dans le bac en traversant un couvercle (2) pour tenir une section de tige (23) de la plante, caractérisé en ce que

a) le dispositif (12, 13) d'injection continue d'une solution nutritive acqueuse est arrangé de telle façon qu'il injecte la solution sous forme atomisée en la dirigeant de bas en haut dans l'espace d'air, et

b) chacun des porte-plantes (17) est arrangé de manière à être capable de tenir la partie inférieure de la tige d'une plante en croissance, et comporte un moyen (22) apte à supporter l'extrémité inférieure de la tige de la plante au niveau même ou au-dessus de la hauteur de la solution nutritive (9) renfermée dans le bac, tout en permettant aux racines, qui tombent de la tige, de pénétrer dans la solution.

2. Appareil selon la revendication 1, caractérisé en ce que les supports (22) sont déplaçables en hauteur à l'intérieur des porte-plantes (17) et aptes à flotter sur la solution nutritive.

3. Appareil selon l'une quelconque des revendications 1 et 2, caractérisé en ce que le couvercle (2) peut être démonté.

4. Appareil selon l'une quelconque des revendication précédentes, caractérisé en ce que les porte-plantes (17) sont solidaires du couvercle.

5. Appareil selon l'une quelconque des revendications 1 à 3, caractérisé en ce que les porte-plantes (17) sont montés coulissant dans le couvercle (2).

6. Appareil selon l'une quelconque des revendications 1 à 3, caractérisé en ce que les porte-plantes (17) reposent sur le fond du bac (1).

7. Appareil selon l'une quelconque des revendications précédentes, caractérisé en ce que le trop-plein (3) est raccordé à une voie d'écoulement (7), de manière à ce que la sortie de la solution (9) du premier vers la dernière se fasse en chute libre.

8. Appareil selon l'une quelconque des revendications précédentes, caractérisé en ce que plusieurs dispositifs (13) d'injection de solution sont montés à l'intérieur du bac (1) et espacés axialement les uns des autres.

9. Appareil selon la revendication 8, comprenant un tube d'amenée (12) qui s'étend en direction axiale et comporte plusieurs alésages (13) susceptibles d'éjecter de la solution circulant sous pression dans le tube.

10. Appareil selon la revendication 9, caractérisé en ce que chacun des alésages (13) s'élargit vers l'extérieur et est incliné dans le sens dans lequel s'écoule la solution dans le tube (12).

11. Appareil selon l'une quelconque des revendications précédentes, caractérisé en ce que les parois du bac (1) sont isolées à la chaleur.

12. Appareil selon la revendication 11, fabriqué à partir de plaques en matière plastique, composées de deux couches espacées l'une de l'autre et liées entre elles par plusieurs entretoises (50) séparées.

13. Appareil selon l'une quelconque des revendications 1 à 12, dont le porte-plante (17) comporte en outre un moyen (25) capable de maintenir une tige en position verticale.

14. Appareil selon l'une quelconque des revendications 9 à 13, caractérisé en ce que le support (22) du porte-plante (17), qui supporte l'extrémité inférieure de la tige de la plante, est déplaçable en hauteur et apte à flotter sur la solution nutritive.

15. Installation de culture hydroponique, comprenant au moins un appareil selon l'une quelconque des revendications 1 à 14 et raccordé, d'une part, à un dispositif (29) d'alimentation en solution nutritive et, d'autre part, à un dispositif (30) d'évacuation de la solution nutritive; un réservoir (31) de solution nutritive; et un dispositif (38) à faire circuler la solution nutritive en circuit fermé entre le-dit appareil ou les-dits appareils et le réservoir.

**Patentansprüche**

1. Vorrichtung zur Hydroponik mit einem abgedeckten Trog (1) zur Aufnahme einer Menge (9) an Nährlösung und einem Luftraum oberhalb der Lösung, einem Überlauf (3) für die kontinuierliche Abgabe der Lösung aus dem Trog, wobei der Überlauf derart einstellbar ist, daß der Flüssigkeitsspiegel innerhalb des Trogs überwacht ist, einer Einrichtung (12, 13) zum kontinuierlichen Einspritzen einer wässrigen Pflanzen-Nährlösung in den Trog und in den Trog durch eine Abdeckung (2) reichende und einen Stengelabschnitt (23) einer Pflanze haltende Pflanzenhalter (17), dadurch gekennzeichnet, daß

(a) die Einrichtung (12, 13) zum kontinuierlichen Einleiten einer wässrigen Pflanzen-Nährlösung derart ausgebildet ist, daß sie in die Lösung in zerstäubert Form in den Luftraum nach oben gerichtet einspritzt und

(b) die Pflanzenhalter (17) derart ausgebildet sind, daß sie jeweils den unteren Stengelbereich einer wachsenden Pflanze zu halten vermögen und jeweils Mittel (22) zur Unterstützung des unteren Stengelendes der Pflanze am oder oberhalb des Spiegels der Nährlösung (9) im Trog aufweisen, während sie gleichzeitig den vom Stengel nach unten ragenden Wurzeln in die Lösung zu reichen gestatten.

2. Vorrichtung nach Anspruch 1, dadurch gekennzeichnet, daß die Mittel (22) zur Unterstützung innerhalb der Pflanzenhalter (17) vertikal auf- und abverstellbar sind und auf der Nährlösung zu schwimmen vermögen.

3. Vorrichtung nach Anspruch 1 oder 2, dadurch gekennzeichnet, daß die Abdeckung (2) abnehmbar ist.

4. Vorrichtung nach einem der vorhergehenden Ansprüche, dadurch gekennzeichnet, daß die Pflanzenhalter (17) mit der Abdeckung ein Ganzes bildend ausgebildet sind.

5. Vorrichtung nach einem der Ansprüche 1 bis 3, dadurch gekennzeichnet, daß die Pflanzenhalter (17) in der Abdeckung (2) verschieblich eingefügt sind.

6. Vorrichtung nach einem der Ansprüche 1 bis 3, dadurch gekennzeichnet, daß die Pflanzenhalter (17) auf dem Boden des Trogs (1) aufruhen.

7. Vorrichtung nach einem der vorhergehenden Ansprüche, dadurch gekennzeichnet, daß der Überlauf (3) mit einem Abfluß (7) derart verbunden ist, daß die Lösung (9) von ersterem zu letzterem durch freien Fall abgegeben wird.

8. Vorrichtung nach einem der vorhergehenden Ansprüche, dadurch gekennzeichnet, daß mehrere Einrichtungen (13) zum Einspritzen von Lösung innerhalb des Trogs (1) und in axialer Richtung mit Abstand voneinander vorgesehen sind.

9. Vorrichtung nach Anspruch 8 mit einem sich in axialer Richtung erstreckenden Zuleitungsrohr (12) mit einer Vielzahl von Bohrungen (13) zum Ausspritzen von unter Druck durch das Rohr fließender Lösung.

10. Vorrichtung nach Anspruch 9, dadurch gekennzeichnet, daß sich jede Bohrung (13) nach außen hin erweitert und in Richtung der Strömung der Lösung durch das Rohr (12) geneigt ist.

11. Vorrichtung nach einem der vorhergehenden Ansprüche, dadurch gekennzeichnet, daß die Wände des Trogs (1) wärmeisoliert sind.

12. Vorrichtung nach Anspruch 11, die aus Kunststofftafeln gefertigt ist, welche zwei voneinander im Abstand vorgesehene Lagen haben, die durch eine Vielzahl einzelner Abstandselemente (50) miteinander verbunden sind.

13. Vorrichtung nach einem der Ansprüche 1 bis 12, deren Pflanzenhalter (17) ferner Mittel (25) zum Halten der Stengel in aufrechter Stellung aufweisen.

14. Vorrichtung nach einem der Ansprüche 9 bis 13, dadurch gekennzeichnet, daß die Unterstützung (22) der Pflanzenhalter (17) zur Unterstützung des unteren Stengelendes der Pflanze vertikal auf- und abverstellbar und auf der Nährlösung schwimmbar ist.

15. Anlage zur Hydroponik mit wenigstens einer Vorrichtung nach einem der Ansprüche 1 bis 14, die einerseits mit einer Einrichtung (29) zur Zuführung von Nährlösung und andererseits mit einer Einrichtung (30) zur Abfuhr von Nährlösung verbunden ist, einem Reservoir (31) für Nährlösung und einer Einrichtung (38) zur Umwälzung der Nährlösung in einem geschlossenen Kreislauf zwischen der (den) Vorrichtung(en) und dem Reservoir.

# Fig. 1

# Fig. 2

# Fig. 7

Fig. 3

Fig. 4

Fig. 5

23

25

17

18

22

24

21

21

19

20

50

0010737

3

Fig. 6

0010737